# EUROPEAN PATENT APPLICATION

(11) **EP 4 718 447 A1**
(43) Date of publication of application: **01.04.2026**
(21) Application number: 25203217.2
(22) Date of filing: 18.09.2025
(51) Int. Cl.: G10L 15/16, G06F 40/295, G10L 15/18, G10L 15/183, G10L 15/187, G10L 15/22, G10L 15/26

(54) **CONTEXT-BASED PHONETIC CORRECTIONS FOR ENTITIES REFERENCED IN AUDIO TRANSCRIPTIONS**

(30) Priority: 25.09.2024 US 202418896135
(71) Applicant: Microsoft Technology Licensing, LLC, Redmond, WA 98052 (US)
(72) Inventor: KESAVAMOORTHY, Harini, Redmond, 98052 (US); RAMAN, Karthik, Redmond, 98052 (US); PATHAK, Sayan D, Redmond, 98052 (US); BASOGLU, Christopher Hakan, Redmond, 98052 (US); JAIN, Manisha, Redmond, 98052 (US); SHAH, Amy, Redmond, 98052 (US); TAN, Sharman W, Redmond, 98052 (US); BEHRE, Piyush, Redmond, 98052 (US)
(74) Representative: CMS Cameron McKenna Nabarro Olswang LLP

(57) **Abstract**

A method for correcting misrecognized entity names in audio transcriptions includes receiving a transcribed utterance including dialog of a conversation and obtaining conversation context data associated with the conversation to compile a contextually relevant entity list of entities with contextual relevance to the transcribed utterance. The method further includes providing a phonetic similarity model with an input that includes the transcribed utterance and an instruction to use the contextually relevant entity list to identify specific entities phonetically similar to the transcribed utterance; receiving, from the phonetic similarity model, an output identifying one or more entity names from the contextually relevant entity list that has been determined to satisfy a phonetic similarity metric with the transcribed utterance; and correcting a transcription error in the transcribed utterance using the one or more entity names output by the phonetic similarity model.

## Description

### Background

In modern speech-based communication applications, it is becoming increasingly common to employ artificial intelligence (AI) models for speech-to-text conversion. While current state-of-the-art language models exhibit strong performance in recognizing common words, it is common for these models to struggle with recognizing out-of-vocabulary (OOV) terms due to homophonic misrecognition. Misrecognition can lead to inaccurate name and entity substitution, such as by using "Cyan" for the name "Sayan," "vomit" for the name "Amit", "Honey" for "Hanyi", "Car trick" for "Karthik, etc. These inappropriate and sometimes even insulting errors undermine the utility of speech-to-text technologies in real-time applications like voice assistance and transcription services.

### Summary

According to one implementation, a method of for correcting entity names in audio transcriptions includes receiving a transcribed utterance including dialog of a conversation; obtaining conversation context data associated with the conversation to compile a contextually relevant entity list including entities that have contextual relevance to the transcribed utterance; and providing a phonetic similarity model with an input that includes the transcribed utterance and an instruction to use the contextually relevant entity list to identify specific entities phonetically similar to the transcribed utterance, where the phonetic similarity model is trained to recognize phonetic similarities between entities and phonetic data. The method further includes receiving, from the phonetic similarity model, an output identifying one or more entity names from the contextually relevant entity list that has been determined to satisfy a phonetic similarity metric with the transcribed utterance; and identifying and correcting a transcription error in the transcribed utterance using the one or more entity names output by the phonetic similarity model.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Other implementations are also described and recited herein.

### Brief Description of the Drawings

FIG. 1 illustrates an example system that performs post-processing of audio transcriptions to correct entity names using conversation context data to inform phonetic matching.
FIG. 2 illustrates additional aspects of an example system that performs context-based phonetic corrections for entities referenced in audio transcriptions.
FIG. 3 illustrates example operations for correcting entity names in transcriptions of audio data
FIG. 4 illustrates an example schematic of a processing device suitable for implementing aspects of the disclosed technology.

### Detailed Description

Speech recognition is widely used in applications such as automated phone systems and intelligent meeting assistants. One persisting shortcoming of these systems is the accurate recognition of uncommon entities, such as unique names and technical jargon. Misinterpretations can have a substantial impact not only on the user's perceived quality of a transcription system but also on downstream tasks that rely on audio transcriptions.

There are numerous factors that contribute to the challenges in training machine learning (ML) systems to recognize uncommon entities. One key challenge relates to variations in pronunciation that are widespread in spoken language. For instance, the technical term 'cache' can be pronounced as "cash" be some individuals and as "kaysh" by others, which can confuse a system not trained on these variations. Likewise, names and technical terms may be pronounced differently based on regional accents and dialects. For instance, the word 'data' is pronounced 'day-ta' in some regions of the world and 'dah-ta' in others. This variation can hinder accurate recognition.

Another challenge in training artificial intelligence (AI) to accurately recognize names of rare entities arises from the fact that words and names can have different meanings depending on their usage. For example, it is possible references could be made to the names "Sean" and "Shawn" within the same conversation. Participants in the conversation utilize context to understand these types of references; however, trained speech recognition models typically analyze words in isolation and are, consequently, unable to utilize context to make sophisticated contextual inferences. For example, a trained model is unlikely to be able to infer the fact that "Sean" is intended with respect to dialog pertaining to a new employee onboarding task because "Sean" is the human resources manager while "Shawn" is a data systems engineer.

Still other challenges in spoken entity recognition arise due to insufficient training data of AI systems. Infrequently used names and technical terms fall in the tail end of training set entity distributions - meaning, many of these terms lack adequate representation within respective AI training datasets. For instance, rare scientific terms like 'polymerase' or 'amniocytes' and uncommon names like 'Xochitl" or "Euripides" may not be present in the training data, making them difficult for a trained model to recognize. Additionally, some words may be spelled differently in different regions or contexts, causing confusion for AI systems. Amplifying this issue is the fact that some names trend in and out of fashion. For example, the name "Katniss" surged in popularity following the "Hunger Games^{®}" movie series and "Khaleesi" became a popular figure to reference following the "Game of Thrones^{®}" TV series. Likewise, words and jargon are often invented in scientific and technical fields ("cryptocurrency", "blogosphere").

To ensure accurate and efficient performance, it is crucial to account for many, if not all, of the above types of factors while developing AI systems for speech recognition. The herein-disclosed technology includes a post-processing technique that corrects out-of-vocabulary (OOV) entity names in AI-transcribed speech by using context data pertaining to a conversation to inform the identification and correction of transcription errors. In one implementation, the disclosed techniques provide for mining context data about a conversation being transcribed to identify entities that are relevant to the conversation, such as names of contacts of the conversation participants and/or topics being discussed. These contextually relevant entities are used to bias a selection task performed by a phonetic matching model that uses learned phonetic associations to match transcribed audio with learned entities. According to one implementation, the selection task is biased to increase selection odds of entities appearing on a "master entity list" (e.g., of OOV entities) that have also been identified as having contextual relevance to the conversation. This context-based biasing significantly increases the accuracy of the resulting phonetic matches and transcription corrections as compared to existing models trained to carry out similar tasks.

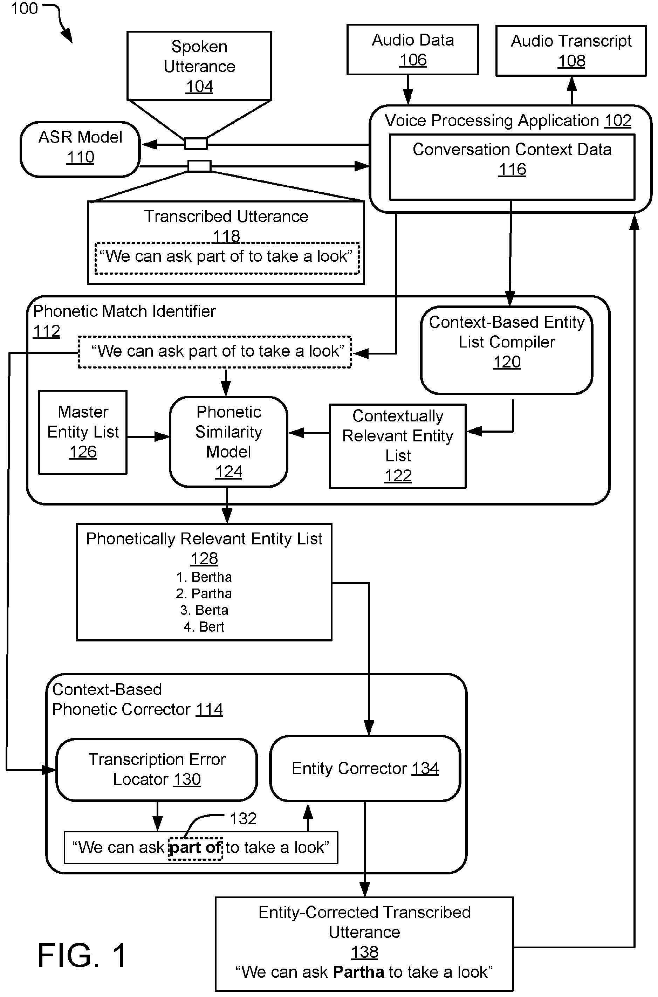

FIG. 1 illustrates an example system 100 that performs post-processing of audio transcriptions to correct entity names using conversation context data 116 to inform phonetic matching. The system 100 includes a voice processing application 102 that uses a collection of AI models to generate a textual transcription of audio data 106. In FIG. 1, this textual transcription is shown as "audio transcript 108."

In various applications, the audio data 106 may be received from different types of applications. For example, a communication application (not shown) may capture an audio recording of a meeting and provide the audio recording as the audio data 106 for processing by the voice processing application 102. Alternatively, a voice assistant or chatbot application may receive the audio data 106 from a user device (e.g., a user asking a series of questions) and provide the audio data 106 to the voice processing application 102.

In the system 100, it is assumed that the audio data 106 includes dialog of a spoken conversation. For example, the audio data 106 includes all or a portion of a conversation between multiple humans or between a human and a trained voice assistant, such as a chatbot or intelligent meeting assistant. The audio data 106 includes a series of spoken utterances (e.g., a spoken utterance 104) that each correspond to a different spoken turn in the conversation. For example, a first utterance in the conversation could be: "Alright, I think we're all here, so let's get started. John, can you share the agenda for the meeting today?" followed by a second spoken turn of the conversation (e.g., John speaking): "Yes, here it is. Let me know when you can see the screen I'm sharing."

In one implementation, the audio data 106 for the conversation is received and processed by the voice processing application 102 after the conversation has concluded. For example, an entire meeting is recorded and then the recording is input to the voice processing application 102 for generation of the audio transcript 108. In another implementation, different portions of the audio data 106 are received by the voice processing application 102 at different points in time while the conversation is on-going, and the voice processing application 102 generates the audio transcript 108 in real-time, e.g., by generating an audio transcription for one spoken utterance at a time.

The voice processing application 102 initiates processing on the audio data 105 by passing a first spoken utterance 104 of the conversation to an automated speech recognition (ASR) model 110. The ASR model 110 is a language model, such as a transformer-based model (e.g., a generative pre-trained transformer (GPT) model, an Open Pretrained Transformer (OPT) model, Bidirectional Encoder Representations from Transformers (BERT), Bioscience Large Open-science Open-access Multilingual (BLOOM) model, seq2seq models, long short-term memory (LSTM) network, and recurrent neural networks (RNNs). As used herein, "language model" refers to a trained model capable of processing inputs representing language. While this class of trained models includes natural language processing (NLP) models that process language in textual form, it also includes certain multimodal models that can receive prompts that include various types of input (e.g., text, image, audio, and/or video data) and likewise generate outputs of various types that are not necessarily the same as the input type. Examples of publicly-available multimodal language models include the Mistral AI model and the large language model Meta AI (LLaMa) model.

The ASR model 110 transcribes the spoken utterance 104 into text, shown as transcribed utterance 118. In many cases, the transcribed utterance 118 includes one or more transcription errors that occur when the ASR model 110 fails to recognize an out-of-vocabulary (uncommon) entity, such as a scientific term or the name of a person. In the example shown, the transcribed utterance 118 reads: "we can ask part of to take a look." A user reading the transcribed utterance 118 may notice that something seems incorrect about the use of the phrase "part of," but it may not immediately clear from the transcribed utterance 118 or even from the surrounding conversation data (e.g., dialog during previous or following turns of conversation) how to best correct this error to align with the speaker's original intent. Per the operations described below with respect to a phonetic match identifier 112 and a context-based phonetic corrector 114, the transcribed utterance 118 is automatically corrected before the audio transcript 108 is made available to end user(s) of the system 100.

The voice processing application 102 provides the transcribed utterance 118 along with certain conversation context data 116 to the phonetic match identifier 112. As used herein, the term "conversation context data" refers to data pertaining to a conversation that provides context usable to infer the meaning of portions of phonetic data within a textual transcript of the conversation. By example, the conversation context data 116 may include the names of participant(s) to the conversation being transcribed (e.g., names stored in association with profile data for the application that generated the audio data 106); words, phrases, or topics discussed during the conversation; user data stored in association with the conversation participants such as contact lists, emails, and documents accessed and/or managed by the participant(s); entity names appearing within the user data; and entity names stored in association with topics discussed in the conversation.

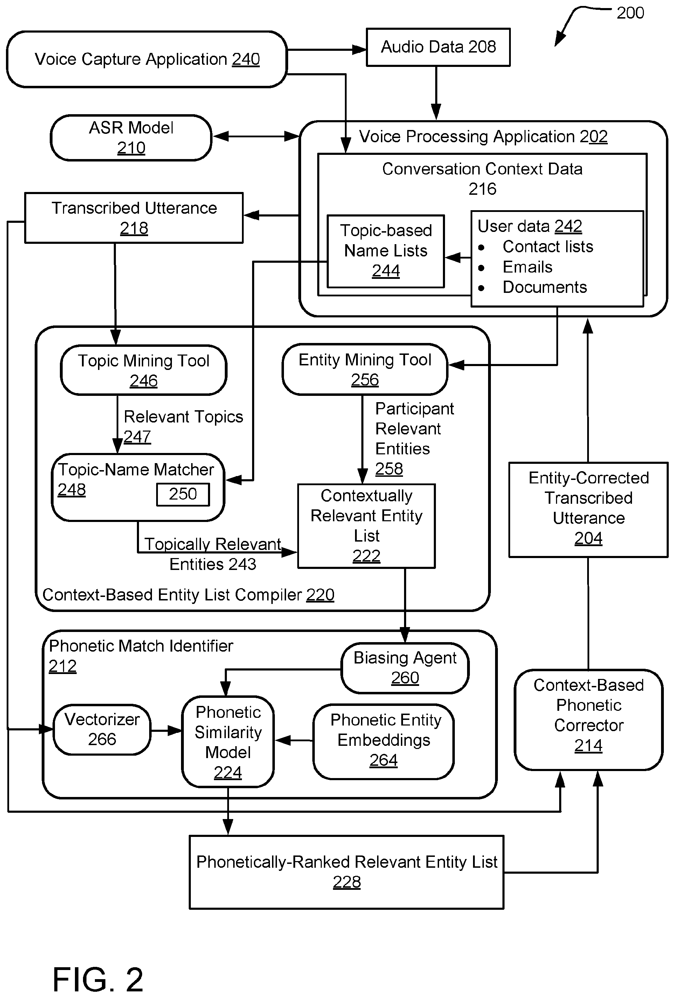

In one implementation, the voice processing application 102 mines the conversation context data 116 from the application that captures/provides the audio data 106 of the conversation. In other implementations, the voice processing application 102 communicates with other applications used by participant(s) of the conversation and mines the context-based conversation data from those applications and user data accessible to such applications. Further examples of conversation context data 116 are discussed in detail with respect to FIG. 2.

The phonetic match identifier 112 includes a context-based entity list compiler 120 that compiles a "contextually relevant entity list 122" of entities that appear within the conversation context data 116. For example, the contextually relevant entity list 122 is populated with the names of participants to the conversation, names appearing in the contact lists of the individuals participating in the conversation, names of people and/or other (non-human) entities extracted from documents and/or emails composed or accessed by the participant(s) to the conversation, names of individuals that authored or accessed documents residing pertaining to topic(s) discussed within the conversation, topics extracted from documents deemed relevant to the conversation, entities corrected by the system 200 earlier within the same conversation, and more.

The contextually relevant entity list 122 is provided as input to a phonetic similarity model 124, which is a model trained to recognize phonetic similarities between entities and phonetic data. For example, the phonetic similarity model 124 is trained via a supervised learning technique on a corpus of training data that includes words or phrases. During model training, these words are converted into a series of phonetic symbols or vectors that represent their pronunciation (e.g., "cat" and "bat" are converted into /kæt/ and /bæt/). Phonetic features, such as place and manner of articulation, voicing, and phoneme duration, are extracted to create embeddings or feature vectors for each word, where similar embeddings represent words or phrases with similar phonetic pronunciations. Examples of currently existing applications to assign words to corresponding phonetic representations (thereby building a dataset for training a phonetic similarity model) include Soundex, Metaphone, the Levenshtein Distance algorithm, and more. Examples of phonetic similarity models include Grapheme-to-Phoneme (G2P) Models and DeepPhonem. In one implementation, the phonetic similarity model 124 is trained to identify similarities between entities appearing on a master entity list 126 (e.g., within the training dataset of the phonetic similarity model 124 ) and different phonetic portions of the transcribed utterance 118 that respectively correspond to different words or phrases. In one implementation, the master entity list 126 is an extensive list of rare/uncommon entity names. For example, the list includes human names and non-human entity names (e.g., scientific jargon) known to fall in the tail ends of the distribution of named entities within the training dataset of the ASR model 110.

During initial training, the phonetic similarity model 124 learns phonetic associations between entities appearing in the master entity list 126 and phonetic data (e.g., words, phrases, and collections of sounds, which may or may not be actual words). For example, the phonetic similarity model 124 has learned that there exists a close phonetic association between the name "Amit' (which appears on the master entity list 126) and the words "vomit", "grommet", and "comet." Likewise, the master entity list 126 may include the name "Hanyi", which the phonetic similarity model 124 has learned is phonetically similar to the terms "honey" and "hiney." By further example, the master entity list 126 may include the name "Aaryn", which the phonetic similarity model has learned is phonetically similar to Erin, Aaron, Arron, errand, etc.

In one implementation, the master entity list 126 includes an extensive list of entities - e.g., thousands or millions of rare/uncommon entity names. Although small language models (SLMs) have been previously trained to recognize phonetic similarities with respect to such entity lists, the accuracy of these phonetic-matching SLMs is typically inversely correlated with the size of the list that the model is asked to select from when identifying phonetic matches to input speech or text. That is, a phonetic matching SLM typically does a better job of recognizing a rare entity name when asked to select from a small entity list that includes the rare entity name than when asked to select from a comparatively large list that includes the rare entity name. This demonstrates an inherent limitation of existing phonetic matching models - that is, most of these models do not provide high accuracy when matching phonetic data to a rare entity name unless asked to choose from a somewhat small list of possibilities.

The herein-disclosed techniques leverage the above-described limitation of previous phonetic matching models by way of a two-part process. During the first part of this process, the phonetic match identifier 112 performs operations that effectively "filter" (and thereby reduce the size of) the master entity list 126 to generate a phonetically relevant entity list 128, which represents a subset of entities on the master entity list 126 that have a high likelihood of appearing within the transcribed utterance 118. Operations for generating the phonetically relevant entity list 128 (e.g., the filtered version of the master entity list 126) are described in detail below with respect to operations of the phonetic match identifier 112. During a second step of the process, the filtered entity list (shown in FIG. 1 as "phonetically relevant entity list 128") is provided as input to a phonetic correction model (shown as "context-based phonetic corrector 114), which corrects mis-transcribed portions of the transcribed utterance 118 by replacing those mis-transcribed portions with select entity names that appear within the filtered list of entity names. The reliance on the filtered list as opposed to the master entity list 126 allows the entity name corrections to be implemented with much higher accuracy than a phonetic model that is asked to perform such recognition using a much larger entity list (e.g., the master entity list 126).

The above-mentioned two-part process is described in the following paragraphs in greater detail. The first part of this process (filtering the master entity list 126) is performed by the phonetic match identifier 112, which includes the phonetic similarity model 124. The phonetic similarity model 124 is tasked with selecting entity names that appear on the master entity list 126 and that are determined to satisfy a phonetic similarity metric (e.g., a model-learned similarity threshold) computed with respect to the transcribed utterance 118. According to one implementation, the computation of the phonetic similarity metric is biased to increase apparent phonetic similarities, and thereby selection odds, of names that appear in both the contextually relevant entity list 122 (e.g., the list generated from the conversation context data 116) and the master entity list 126. This is an example of "lexicon biasing" which involves providing a model with an input parameter defining a list of words or phrases that the model is trained or otherwise configured to prioritize during prediction.

In one implementation, the phonetic similarity metric is satisfied by select entities for which the computed value of the phonetic similarity metric exceed a predefined threshold, with some biasing performed with respect to entities appearing in contextually relevant entity list 122, as is discussed in greater detail with respect to FIG. 2. In another implementation, the phonetic similarity metric is satisfied by a predefined number (N) of entities that are determined to have the greatest degree of phonetic similarity with the transcribed utterance 118.

By assessing the phonetic similarity metric as generally described above, the phonetic similarity model 124 identifies select entities from the master entity list 126 that have the greatest phonetic association with the conversation data (e.g., the contextually relevant entity list 122 and the transcribed utterance 118). These select entities from the master entity list 126 are added to the phonetically relevant entity list 128. In one implementation, the phonetically relevant entity list 128 is a ranked listing that orders the entities in order of decreasing phonetic similarity to the transcribed utterance 118.

Due to the above-described methodology, the phonetically relevant entity list 128 represents a filtered subset of the entities on the master entity list 126 that are determined to have the highest likelihood of appearing within the transcribed utterance 118. This likelihood is determined both based on an assessment of phonetic similarities between the entities and phonetic data of the conversation and also based on a consideration of the contextually relevant entity list 122 (e.g., per the entity selection biasing technique discussed in greater detail with respect to FIG. 2).

The phonetically relevant entity list 128 is passed as input to the context-based phonetic corrector 114. The context-based phonetic corrector 114 is a phonetic correction model with subcomponents trained to perform two discrete tasks - (1) transcription error identification and (2) transcription error correction. The first of these two tasks is performed by a transcription error locator 130 and the second is performed by an entity corrector 134. In some implementations, the below-described functions of the transcription error locator 130 and the entity correct 134 are performed by a single trained model. Other implementations may utilize two separate trained models to perform the tasks of transcription error identification and correction. The transcription error locator 130 employs logic to identify portions of the transcribed utterance 118 that are most likely to include errors. For example, the transcription error locator 130 is an off-the-shelf language model (e.g., a publicly-available large language model such as GPT-4, BLOOM, LlAMAav2, or others) or a specially-trained small language model (SLM) that has been fine-tuned to perform grammatic correction tasks.

In the example shown, the transcription error locator 130 identifies a location 132 within the transcribed utterance 118 as having a high likelihood (e.g., in excess of a predefined threshold) as including a transcription error. The portion of the transcribed utterance 118 corresponding to this location 132 includes the words "part of" (e.g., within the incorrectly transcribed phrase "we can ask part of to take a look"). The transcribed utterance 118 is passed, along with the location 132 of the likely error, and the phonetically relevant entity list 128, into the entity corrector 134.

The entity corrector 134 next determines a probability that the text at the location 132 of the transcription error (e.g., "part of") corresponds to each of entity name on the phonetically relevant entity list 128. In the illustrated example, this step entails computing a phonetic similarity metric between the phonetic data "part of" (corresponding to the identified transcription error at the location 132) and each different named entity appearing on the phonetically relevant entity list 128. For example, the phonetic similarity metric is a cosine similarity or dot product computed between a vector representation of the phonetic data being corrected (e.g., the term "part of") and a vector representation of each entity on the phonetically relevant entity list 128. In one implementation, the phonetically relevant entity list 128 is a ranked list (e.g., in order of highest relevance), and the phonetic similarity metric is computed between the transcribed text at the location 132 of the transcription error and each of a top N number of entities on the ranked list (e.g., a top 100 entities). The use of a reduced-size list for this comparison increases overall accuracy, as language models typically do a better job of correcting errors when provided with a more focused list of correction options. In cases of ambiguity (e.g., where two or more entity names on the phonetically relevant entity list 128 have substantially equal probability of being the entity name actually spoken in conversation), the entity corrector 134 may defer to selecting entity name that is higher ranked on the phonetically relevant entity list 128.

In the illustrated example, the entity corrector 134 determines that the phonetic data "part of" has a higher degree of phonetic similarity to the entity name "Partha" than any other entity on the phonetically relevant entity list 128. Consequently, the entity corrector 134 selects "Partha" as the corrected entity name and substitutes "Partha" for the term "part of" within the transcribed utterance 118, yielding an entity-corrected transcribed utterance 138 which now reads: "We can ask Partha to take a look."

The logic employed by the entity corrector 134 to perform the above-described phonetic assessment is, in one implementation, the same or similar to the logic employed by the phonetic similarity model 124 of the phonetic match identifier 112 when initially selecting terms from the master entity list 126 with a high likelihood of appearing in the transcribed utterance 118. Notably, however, the entity corrector 134 is assigned a more focused (smaller-scope) task than the phonetic similarity model 124. Rather than compare the entire transcribed utterance 118 to a long list of entities (e.g., the master entity list 126), the entity corrector 134 is asked to compare a small portion of the transcribed utterance 118 (e.g., the portion identified as containing the mis-transcribed text "part of") to the phonetically relevant entity list 128, which is much smaller than the master entity list 126. The focused scope of the task significantly increases the accuracy of the resulting phonetic matches as compared to alternative entity name correction solutions that perform entity name corrections by comparing each entire transcribed utterance 118 to an extensive list of rare entities.

The entity-corrected transcribed utterance 138 is returned to the voice processing application 102 and added to the audio transcript. In this way, each spoken utterance in the audio data 106 may be independently subjected to the above-described post-processing operations for entity correction.

FIG. 2 illustrates additional aspects of an example system 200 that performs context-based phonetic corrections for entities referenced in audio transcriptions. The system 200 includes a voice processing application 202 that interacts with various software components that employ trained models to perform different tasks related to transcribing audio data 208. Many of the components shown in FIG. 2 provide the same or similar functionality as like-named software components described with respect to FIG. 1. However, system 200 illustrates additional types of conversation context data 216 that is used to inform the selection of entity names used to correct errors in the transcribed utterance 218. Additionally, the system of FIG. 2 illustrates example subcomponents of a context-based entity list compiler 220 and phonetic match identifier 212 that are not discussed with respect to FIG. 1.

In FIG. 2, the voice processing application 202 is shown receiving the audio data 208 from a voice capture application 240. The voice capture application 240 is a computer application that records spoken dialog (e.g., the audio data 208). In one implementation, the voice capture application is a communication application, such as a desktop or web-based application that supports Voice over Internet Protocol (VoIP) and/or web-based video conferencing. In another implementation, the voice capture application 240 is an AI-trained voice assistant that interprets and responds to spoken user queries.

The audio data 208 captures some or all audio of a spoken conversation. Based on data included in the audio data 208 (e.g., spoken dialog or metadata passed with the audio), the voice processing application 202 mines or otherwise obtains the conversation context data 216, which pertains to the same conversation as the audio data 208. In one implementation, the audio data 208 includes metadata identifying a user account with the voice capture application 240 and/or accounts of other participants in the conversation, and the voice processing application 202 retrieves, from the voice capture application 240, user data 242 that stored in association with the user account and/or with the user accounts owned by other participants to the conversation. For example, user account data for many different users of the voice capture application 240 may reside in a web-based application data store accessible to the voice processing application 202. The voice processing application 202 either queries this application data store for the user data 242 or automatically receives the user data 242 from the application data store in association with the audio data 208 for the conversation.

The user data 242 includes all data stored in association with the participants of the conversation (e.g., the users of the voice capture application 240), including contact lists of those participants and the contents of previous communications sent or received through the voice capture application 240. In implementations where the voice capture application 240 supports user-to-user written communications or document sharing, the user data 242 may include messages and/or emails received or sent by the participants in the conversation and/or documents shared with or shared by those participants in previous conversations. In some implementations where the voice capture application 240 is part of an integrated, multi-application software offering (e.g., Microsoft Office 365^{®}), the user data 242 includes user documents and other user data accessible to any of the individual applications included within the offering.

In the system 200, the conversation context data 216 is shown to include topic-based name lists 244, which can be understood as organized data derived at least partially from the user data 242. In one implementation, the topic-based name lists 244 include a collection of lists that each identifies a topic and includes a list of entity names determined, based on the user data 242, to have some association with that topic. Assume, the user data 242 includes one thousand documents composed and/and shared by different users and that ten of these one thousand documents reference the topic "retrieval augmented generation (RAG)." One of the topic-name lists is therefore titled the "retrieval augmented generation (RAG)" and includes the names of all users that authored, shared, or otherwise accessed the ten documents mentioning RAG. Additionally, the "retrieval augmented generation" topic-name list may also include names of non-human entities (e.g., technical jargon) determined to have topical relevance to "retrieval augmented generation" systems, such as entities mined from the ten documents about RAG. In this way, the topic-based name lists 244 can be used to infer entity names that are likely to be relevant to the topic(s) mentioned during the conversation that is being transcribed.

In some implementations, the conversation context data 216 also includes entities that have been named earlier in the same conversation, including entity names that were ultimately used to correct transcription errors occurring earlier within the same conversation. These previously-referenced entities are mined, along with the user data 242, and used to populate the contextually relevant entity list.

In the system 200, the voice processing application 202 provides each spoken utterance (e.g., conversation turn) included in the audio data 208 to an ASR model 210. The ASR model 210, in turn, generates textual representations of each of the spoken utterances) that are individually processed by other software components described below. In the example of FIG. 2, a transcribed utterance 218 is generated by the ASR model 210 and provided, by the voice processing application 202, to the context-based entity list compiler 220.

The context-based entity list compiler 220 includes a topic mining tool 245 that parses the transcribed utterance 218 to extract different topics mentioned within the transcribed utterance (shown as "relevant topics 247"). For example, the relevant topics 247 may be extracted by providing the transcribed utterance 218 as input to a model trained to perform topic extraction. One example of such a model is Latent Dirichlet Allocation (LDA), which is a generated probabilistic model trained to recognize hierarchical similarities between topics. LDA identifies patterns of co-occurrence in the input text and groups them into topics (e.g., the words "election" and "vote" in the same utterance may be categorized under a "politics" topic). Likewise, transformer-based models, such as BERT or GPT models, can also be fine-tuned for topic extraction from speech transcripts. This fine-tuning entails providing these trained base models with a labeled dataset that consists of transcripts paired with pre-defined topics. Per this approach, each transcript is tagged with one or more topics that the speech is about. The extracted relevant topics 247 are then provided to a topic-name matcher 248 that accesses the topic-based name lists 244 to identify entity names (if any) associated with each of the relevant topics 247. In one implementation, the topic-name matcher 248 retains some topic history throughout transcription activities pertaining to an ongoing conversation. For example, the topic-name matcher 248 stores a historically relevant topic list 250 that identifies all topics extracted by the topic mining tool 246 from previous utterances transcribed for the same conversation. In FIG. 2, the relevant topics 247 and the historically relevant topic list 250 represent further examples of conversation context data that is used to perform entity name correction in audio transcriptions.

The topic-name matcher 248 compares the relevant topics 247 and the topics included in the historically relevant topic list 250 to the topic-based name lists 244 to retrieve an extensive aggregated list of entities associated with the various conversation topics. These entities are shown in FIG. 2 as "topically relevant entities 243" since these entities have been identified as relevant to the topic(s) discussed during the ongoing conversation.

In addition to the topic mining tool 246, the context-based entity list compiler 220 also includes an additional entity mining tool 256 that accesses the user data 242 to compile a list of "participant relevant entities 258." The participant relevant entities 258 include entities that are represented within the user data 242 but that do not necessarily directly relate to topics mentioned during the conversation. For example, the participant relevant entities 258 include entities referenced within documents or emails included in the user data 242 as well as names of users in the contact lists that are not participants in the conversation.

Although some implementations may mine, aggregate, and utilize different types and/or combinations of conversation context data in different ways, the implementation of FIG. 2 aggregates the participant relevant entities 258 and the topically relevant entities 243 into a singular list entitled "contextually relevant entity list 222." The contextually relevant entity list 222 represents a master list of entities that have been identified from the conversation context data 216 as being potentially relevant to the conversation that is being transcribed.

The contextually relevant entity list 222 is next provided as input to a phonetic match identifier 212 that performs a phonetic assessment to identify and rank entity names most likely to appear within the transcribed utterance 218. In the implementation shown, the phonetic match identifier 212 includes a biasing agent 260 that receives the contextually relevant entity list 222 from the context-based entity list compiler 220. The biasing agent 260 defines a biasing input parameter that identifies the entities named in the contextually relevant entity list 222 (e.g., the relevant entities mined from the conversation context data 216). This biasing input parameter is included in an input (e.g., a prompt) that is provided to a phonetic similarity model 224, as generally described below.

The phonetic similarity model 224 is a model trained to recognize phonetic similarities between different text-based phonetic components. During a training process, various entities in a training dataset are translated into embeddings defined within a latent vector space in which vector-to-vector separations correlate with a learned degree of phonetic similarity between the phonetic components corresponding to each pair of vectors. In FIG. 2, these embeddings within the learned phonetic vocabulary of the phonetic similarity model 224 are represented as "phonetic entity embeddings 264." In one implementation, the phonetic entity embeddings 264 correspond to OOV entities included on a master entity list, which is - for example, an extensive list of uncommon entity names, such as human names and scientific jargon, that appear in tail ends of a distribution of entities included with a training dataset used to train the ASR model 210.

A vectorizer 266 generates an embedding based on the transcribed utterance 218, either alone or in combination with other transcribed utterances of the same conversation. This vector representation of the transcribed utterance 218 is defined within the same latent space as the phonetic entity embeddings 264. The phonetic similarity model 224 is then provided with an input (e.g., a prompt, file, or other data) that includes the vector corresponding to the transcribed utterance 218, the biasing input parameter generated by the biasing agent 260, and an instruction to use the biasing input parameter to generate a list of the entities within the vocabulary of the model that are most phonetically similar to the transcribed utterance 218. These entities are ranked, in order of likelihood of appearing within the transcribed utterance 218, and the ranked list is output by the phonetic similarity model 224. This ranked list is shown in FIG. 2 as "phonetically-ranked relevant entity list 228."

When executing the instruction included in the above-described input to the phonetic similarity model 224, the phonetic similarity model 224 applies a selection bias (e.g., a weighted multiplier) when assessing the phonetic similarity of the transcribed utterance 218 to each term in the learned phonetic vocabulary of the model that is also included in the contextually relevant entity list 222. This selection bias functions to increase the odds that the phonetic similarity model 224 will identify the biased entit(ies) as phonetically similar to the transcribed utterance 218. If, for example, the name "Hanyi" appears in the contextually relevant entity list 222, the phonetic embedding representing "Hanyi" may be multiplied by a weight when the phonetic similarity model 224 is computing a phonetic similarity metric to quantify the phonetic similarity between "Hanyi" and the transcribed utterance 218. This weighted multiplier has the effect of increasing the degree of similarity indicated by the resulting computed metric value, thereby increasing the odds that "Hanyi" will be included in the phonetically-ranked relevant entity list 228.

By assessing the phonetic similarity metric as generally described above, the phonetic similarity model 224 identifies entities represented within its learned phonetic vocabulary that have the greatest phonetic association with the transcribed utterance 218, with the selection of the "most" phonetically similar entities being biased in favor of entities that are known (e.g., from the conversation context data 216) to be relevant in some way to the conversation.

The phonetically-ranked relevant entity list 228 is provided to a context-based phonetic corrector 214 that identifies the likely location(s) of errors in the transcribed utterance 218 and then performs phonetic matching to select entit(ies) from the phonetically-ranked relevant entity list 228 to use to correct those transcription errors, thereby generating an entity-corrected transcribed utterance 204. In this way, the phonetically-ranked entity list 227 serves as a multiple-choice roster of entities that the context-based phonetic corrector 214 can select from when choosing terms to "replace" mis-transcribed portions of the transcribed utterance 218. Other functionality of the context-based phonetic corrector 214 not explicitly described with respect to FIG. 2 is assumed to be the same or similar to that described with respect to the context-based phonetic corrector 114 of FIG. 1.

In some implementations, the entity-corrected transcribed utterance 204 is used to generate additional conversation context data 216 that informs entity correction performed with respect to other turns of the same conversation. For example, the voice processing application 202 extracts entities from the entity-corrected transcribed utterance 204 and adds these entities to the conversation context data 216 that is stored for the duration of the transcription tasks pertaining to the same conversation. For example, the correction of "honey" to "Hayni" is saved by the voice processing application 202, in some cases with an additional biasing factor, to ensure that "Hayni" is the favored term used to correct other instances of "honey" or similarly-phonetic phrases that appear later in the same conversation. This is helpful to ensure continuity of corrections that may appear multiple times in conversation (e.g., to ensure that Hayni is the preferred entity name used to correct all similar-sounding phonetic phrases that were likely misrecognized by the ASR model 210).

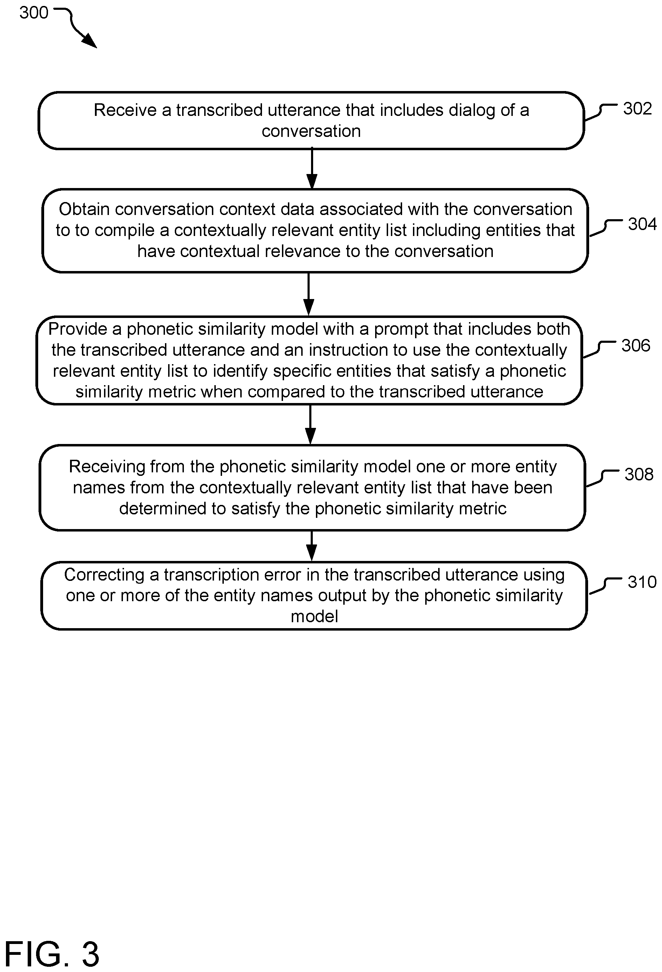

FIG. 3 illustrates example operations 300 for correcting entity names in transcriptions of audio data. The operations 300 include a receiving operation 302 that receives a transcribed utterance including dialog of a conversation. In one implementation, the transcribed utterance is generated by an automated speech recognition model that processes an audio recording of the conversation.

A data retrieval operation 304 mines or otherwise obtains conversation context data associated with the conversation to compile a contextually relevant entity list including entities with contextual relevant to the conversation. Conversation context data includes, for example, user data stored in association with participants in the conversation, topics extracted from the transcribed utterance or earlier portions of the conversation, and entity associations determined with respect to entities named in the user data or the extracted topics.

A prompting operation 306 provides a phonetic similarity model with an input that includes both the transcribed utterance and an instruction to use the contextually relevant entity list to identify specific entities that satisfy a phonetic similarity metric when compared to the transcribed utterance. In one implementation, the phonetic similarity model is trained to recognize phonetic similarities between entities and phonetic data.

A receiving operation 308 receives, from the phonetic similarity model, one or more entity names from the contextually relevant entity list that have been determined to satisfy the phonetic similarity metric. A transcription correction operation 310 corrects a transcription error in the transcribed utterance using one or more of the entity names output by the phonetic similarity model. In one implementation, correcting the transcription error includes replacing phonetic data in the transcribed utterance with a select one of the entity names output by the phonetic similarity model.

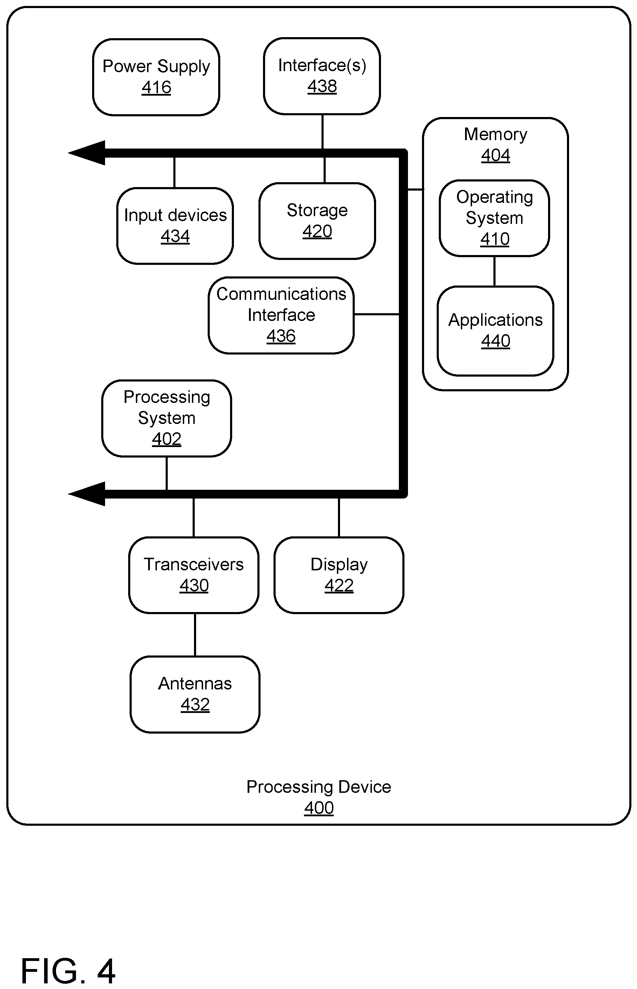

FIG. 4 illustrates an example schematic of a processing device 400 suitable for implementing aspects of the disclosed technology. The processing device 400 includes a processing system 402, memory 404, a display 422, and other interfaces 548 (e.g., buttons). The processing system 402 may have one or more computer processing units (CPUs), graphics processing units (GPUs), etc.

The memory 404 generally includes both volatile memory (e.g., random access memory (RAM)) and non-volatile memory (e.g., flash memory). An operating system 410 resides in the memory 404 and is executed by the processing system 402. One or more applications 440 (e.g., an ASR model, the voice processing application 102 of FIG.1, a phonetic match identifier 112 of FIG. 1, and a context-based phonetic corrector 114 of FIG. 4) and other data are loaded in the memory 404 and executed on the operating system 410 by the processing system 402. The applications 440 may receive inputs from one another as well as from various input local devices 434 such as a microphone, input accessory (e.g., keypad, mouse, stylus, touchpad, gamepad, racing wheel, joystick), or a camera.

Additionally, the applications 440 may receive input from one or more remote devices, such as remotely-located servers or smart devices, by communicating with such devices over a wired or wireless network using more communication transceivers 430 and an antenna 432 to provide network connectivity (e.g., a mobile phone network, Wi-Fi^{®}, Bluetooth^{®}). The processing device 400 may also include one or more storage devices 520 (e.g., non-volatile storage). Other configurations may also be employed.

The processing device 400 further includes a power supply 416, which is powered by one or more batteries or other power sources and which provides power to other components of the processing device 400. The power supply 416 may also be connected to an external power source (not shown) that overrides or recharges the built-in batteries or other power sources.

The processing device 400 may include a variety of tangible computer-readable storage media and intangible computer-readable communication signals. Tangible computer-readable storage can be embodied by any available media that can be accessed by the processing device 400 and includes both volatile and nonvolatile storage media, removable and non-removable storage media. Tangible computer-readable storage media excludes intangible and transitory communications signals and includes volatile and nonvolatile, removable, and non-removable storage media implemented in any method or technology for storage of information such as computer readable instructions, data structures, program modules or other data. Tangible computer-readable storage media includes RAM, read-only memory (ROM), electrically erasable programmable read-only memory (EEPROM), flash memory or other memory technology, CDROM, digital versatile disks (DVD) or other optical disk storage, magnetic cassettes, magnetic tape, magnetic disk storage or other magnetic storage devices, or any other tangible medium which can be used to store the desired information, and which can be accessed by the processing device 400. In contrast to tangible computer-readable storage media, intangible computer-readable communication signals may embody computer readable instructions, data structures, program modules or other data resident in a modulated data signal, such as a carrier wave or other signal transport mechanism. The term "modulated data signal" means a signal that has one or more of its characteristics set or changed in such a manner as to encode information in the signal. By way of example, intangible communication signals include wired media such as a wired network or direct-wired connection, and wireless media such as acoustic, radio frequency (RF), infrared and other wireless media.

Some implementations may comprise an article of manufacture. An article of manufacture may comprise a tangible storage medium (a memory device) to store logic. Examples of a storage medium may include one or more types of processor-readable storage media capable of storing electronic data, including volatile memory or non-volatile memory, removable or non-removable memory, erasable or non-erasable memory, writeable or re-writeable memory, and so forth. Examples of the logic may include various software elements, such as software components, programs, applications, computer programs, application programs, system programs, machine programs, operating system software, middleware, firmware, software modules, routines, subroutines, operation segments, methods, procedures, software interfaces, application program interfaces (API), instruction sets, computing code, computer code, code segments, computer code segments, words, values, symbols, or any combination thereof. In one implementation, for example, an article of manufacture may store executable computer program instructions that, when executed by a computer, cause the computer to perform methods and/or operations in accordance with the described implementations. The executable computer program instructions may include any suitable type of code, such as source code, compiled code, interpreted code, executable code, static code, dynamic code, and the like. The executable computer program instructions may be implemented according to a predefined computer language, manner, or syntax, for instructing a computer to perform a certain operation segment. The instructions may be implemented using any suitable high-level, low-level, object-oriented, visual, compiled and/or interpreted programming language.

Described herein is a method for correcting misrecognized entity names in audio transcriptions includes receiving a transcribed utterance including dialog of a conversation and obtaining conversation context data associated with the conversation to compile a contextually relevant entity list of entities with contextual relevance to the transcribed utterance. The method further includes providing a phonetic similarity model with an input that includes the transcribed utterance and an instruction to use the contextually relevant entity list to identify specific entities phonetically similar to the transcribed utterance; and receiving, from the phonetic similarity model, an output identifying one or more entity names from the contextually relevant entity list that has been determined to satisfy a phonetic similarity metric with the transcribed utterance; and correcting a transcription error in the transcribed utterance using the one or more entity names output by the phonetic similarity model.

In some aspects, the techniques described herein relate to a method for correcting misrecognized entity names in audio transcriptions, the method including: receiving a transcribed utterance including dialog of a conversation; obtaining conversation context data associated with the conversation to compile a contextually relevant entity list including entities that have contextual relevance to the transcribed utterance; providing, to a phonetic similarity model, an input that includes the transcribed utterance and an instruction to use the contextually relevant entity list to identify specific entities phonetically similar to the transcribed utterance, the phonetic similarity model being trained to recognize phonetic similarities between entities and phonetic data; receiving, from the phonetic similarity model, an output identifying one or more entity names from the contextually relevant entity list that has been determined to satisfy a phonetic similarity metric with the transcribed utterance; and correcting a transcription error in the transcribed utterance using the one or more entity names output by the phonetic similarity model.

In some aspects, the techniques described herein relate to a method, wherein the phonetic similarity model is trained to match the phonetic data of the transcribed utterance to embeddings storing phonetic data corresponding to entity names on a master entity list.

In some aspects, the techniques described herein relate to a method, wherein the input includes a biasing input parameter that includes entities named on the contextually relevant entity list, the biasing input parameter increasing selection odds of the entities named on the contextually relevant entity list.

In some aspects, the techniques described herein relate to a method, wherein obtaining the conversation context data further includes mining entity names from one or more of: emails of participants in the conversation; contact lists of the participants in the conversation; and documents of the participants in the conversation.

In some aspects, the techniques described herein relate to a method, wherein obtaining the conversation context data further includes: providing transcribed conversation data from the conversation as input to a model trained to perform topic extraction; receiving, as output from the model, a relevant topic identified based on the transcribed conversation data; accessing a topic-name list to identify entities associated with the relevant topic; and storing, within the contextually relevant entity list, one or more entity names extracted from the topic-name list.

In some aspects, the techniques described herein relate to a method, wherein obtaining the conversation context data further includes: identifying entities that are either named earlier in the conversation or that correspond to transcription errors already-corrected with respect to earlier portions of the conversation.

In some aspects, the techniques described herein relate to a method, wherein correcting a transcription error in the transcribed utterance using the one or more entity names output by the phonetic similarity model further includes: providing the transcribed utterance as input to a transcription error locator trained to locate transcription errors in phonetic transcriptions; receiving location data as output from the transcription error locator, the location data identifying a location within the transcribed utterance that has been identified as having a predefined likelihood of including an error; providing, as input to a phonetic correction model, a portion of the transcribed utterance corresponding to the location and the one or more entity names from the contextually relevant entity list that has been determined to satisfy a phonetic similarity metric with the transcribed utterance; receiving as output from the phonetic correction model a select entity name from the contextually relevant entity list, the select entity name determined to have a closest phonetic association with the portion of the transcribed utterance corresponding to the location of the error; and replacing the portion of the transcribed utterance with the select entity name.

In some aspects, the techniques described herein relate to a transcription error correction system including: a context-based entity list compiler stored in memory that: receives a transcribed utterance pertaining to a conversation; accesses conversation context data associated with the conversation; based on the conversation context data, determines a contextually relevant entity list identifying entities with contextual relevance to the conversation; and a phonetic similarity model stored in memory that receives an input including both the transcribed utterance and the contextually relevant entity list, the phonetic similarity model being trained to recognize phonetic similarities between entities and phonetic data; and a context-based phonetic corrector stored in memory that: receives a phonetically relevant entity list generated by the phonetic similarity model, the phonetically relevant entity list including one or more entities from the contextually relevant entity list that have been determined to satisfy a phonetic similarity metric with the transcribed utterance; and identifies and corrects a transcription error in the transcribed utterance based on the phonetically relevant entity list.

In some aspects, the techniques described herein relate to a transcription error correction system, wherein the input includes a biasing input parameter that includes the entities named on the contextually relevant entity list, the biasing input parameter increasing selection odds of the entities named on the contextually relevant entity list.

In some aspects, the techniques described herein relate to a transcription error correction system, wherein the phonetic similarity model is trained to compare a vectorized representation of the transcribed utterance to stored embeddings corresponding, the comparison being based at least in part on the biasing input parameter.

In some aspects, the techniques described herein relate to a transcription error correction system, wherein the context-based entity list compiler is further configured to mine the conversation context data from one or more of: emails of participants in the conversation; contact lists of the participants in the conversation; and documents of the participants in the conversation.

In some aspects, the techniques described herein relate to a transcription error correction system, wherein the context-based entity list compiler is further configured to: provide the transcribed utterance as input to a model trained to perform topic extraction; receive, as output from the model, a relevant topic identified based on the transcribed utterance; access a topic-name list to identify entities associated with the relevant topic; and store, within the contextually relevant entity list, one or more entities named in the topic-name list.

In some aspects, the techniques described herein relate to a transcription error correction system, wherein the context-based entity list compiler is further configured to: identify entities referenced earlier in the conversation that are not referenced in transcribed utterance; and include in the contextually relevant entity list the entities referenced earlier in the conversation.

In some aspects, the techniques described herein relate to a transcription error correction system, wherein correcting the transcription error in the transcribed utterance based on the phonetically relevant entity list further includes: providing the transcribed utterance as input to a transcription error locator trained to locate transcription errors in phonetic transcriptions; receiving location data as output from the transcription error locator, the location data identifying a location within the transcribed utterance that has been identified as having a predefined likelihood of including an error; providing, as input to a phonetic correction model, a portion of the transcribed utterance corresponding to the location and the phonetically relevant entity list; receiving as output from the phonetic correction model a select entity name from the phonetically relevant entity list, the select entity name determined to have a closest phonetic association with the portion of the transcribed utterance corresponding to the location of the transcription error; and replacing the portion of the transcribed utterance with the select entity name.

In some aspects, the techniques described herein relate to one or more tangible computer-readable storage media encoding processor-executable instructions for executing a computer process including: obtaining conversation context data associated with a conversation or participants of the conversation to compile a contextually relevant list of entities with contextual relevance to the conversation; providing a phonetic similarity model with an input that includes both a transcribed utterance from the conversation and a biasing parameter that identifies the contextually relevant list of entities, the phonetic similarity model being trained to recognize phonetic similarities between entities and phonetic data; receiving, from the phonetic similarity model, a phonetically relevant entity list including one or more entities from the contextually relevant list of entities determined to satisfy a phonetic similarity metric with the transcribed utterance; and correcting a transcription error in the transcribed utterance using an entity name included on the phonetically relevant entity list.

In some aspects, the techniques described herein relate to one or more tangible computer-readable storage media, wherein the phonetic similarity model is configured to: add a selection bias to each entity on a master entity list that is also included in the contextually relevant list of entities, and based on the selection bias and phonetic similarities between phonetic data in the transcribed utterance and names of the entities on the master entity list, generate the phonetically relevant entity list.

In some aspects, the techniques described herein relate to one or more tangible computer-readable storage media, wherein obtaining the conversation context data to compile the contextually relevant list of entities further includes mining entity names from one or more of: emails of participants in the conversation; contact lists of the participants in the conversation; and documents of the participants in the conversation.

In some aspects, the techniques described herein relate to one or more tangible computer-readable storage media, wherein obtaining the conversation context data further includes: providing transcribed conversation data of the conversation as input to a model trained to perform topic extraction; receiving as output from the model a relevant topic identified based on the transcribed conversation data; and accessing a topic-name list to identify entities with associations to the relevant topic, wherein the contextually relevant list of entities includes one or more entities named on the topic-name list.

In some aspects, the techniques described herein relate to one or more tangible computer-readable storage media, further including: including in the contextually relevant list of entities a select entity corresponding to a transcription error already-corrected with respect to an earlier portion of the conversation.

In some aspects, the techniques described herein relate to one or more tangible computer-readable storage media, wherein correcting the transcription error in the transcribed utterance further includes: providing the transcribed utterance as input to a transcription error locator trained to locate transcription errors in phonetic transcriptions; receiving location data as output from the transcription error locator, the location data identifying a location within the transcribed utterance that has been identified as having a predefined likelihood of including an error; providing, as input to a phonetic correction model, a portion of the transcribed utterance corresponding to the location and the phonetically relevant entity list; receiving as output from the phonetic correction model a select entity name from the phonetically relevant entity list; and replacing the portion of the transcribed utterance with the select entity name.

The logical operations described herein are implemented as logical steps in one or more computer systems. The logical operations may be implemented (1) as a sequence of processor-implemented steps executing in one or more computer systems and (2) as interconnected machine or circuit modules within one or more computer systems. The implementation is a matter of choice, dependent on the performance requirements of the computer system being utilized. Accordingly, the logical operations making up the implementations described herein are referred to variously as operations, steps, objects, or modules. Furthermore, it should be understood that logical operations may be performed in any order, unless explicitly claimed otherwise or a specific order is inherently necessitated by the claim language. The above specification, examples, and data, together with the attached appendices, provide a complete description of the structure and use of exemplary implementations.

## Claims

1. A method (300) for correcting misrecognized entity names in audio transcriptions, the method comprising:
receiving (302) a transcribed utterance including dialog of a conversation;
obtaining (304) conversation context data associated with the conversation to compile a contextually relevant entity list including entities that have contextual relevance to the transcribed utterance;
providing (306), to a phonetic similarity model, an input that includes the transcribed utterance and an instruction to use the contextually relevant entity list to identify specific entities phonetically similar to the transcribed utterance, the phonetic similarity model being trained to recognize phonetic similarities between entities and phonetic data;
receiving (308), from the phonetic similarity model, an output identifying one or more entity names from the contextually relevant entity list that has been determined to satisfy a phonetic similarity metric with the transcribed utterance; and
correcting (310) a transcription error in the transcribed utterance using the one or more entity names output by the phonetic similarity model.

2. The method of claim 1, wherein the phonetic similarity model is trained to match the phonetic data of the transcribed utterance to embeddings storing phonetic data corresponding to entity names on a master entity list.

3. The method of claim 2, wherein the input includes a biasing input parameter that includes entities named on the contextually relevant entity list, the biasing input parameter increasing selection odds of the entities named on the contextually relevant entity list.

4. The method of claim 1, wherein obtaining the conversation context data further includes mining entity names from one or more of:
emails of participants in the conversation;
contact lists of the participants in the conversation; and
documents of the participants in the conversation.

5. The method of claim 1, wherein obtaining the conversation context data further includes:
providing transcribed conversation data from the conversation as input to a model trained to perform topic extraction;
receiving, as output from the model, a relevant topic identified based on the transcribed conversation data;
accessing a topic-name list to identify entities associated with the relevant topic; and
storing, within the contextually relevant entity list, one or more entity names extracted from the topic-name list.

6. The method of claim 1, wherein obtaining the conversation context data further includes:
identifying entities that are either named earlier in the conversation or that correspond to transcription errors already-corrected with respect to earlier portions of the conversation.

7. The method of claim 1, wherein correcting a transcription error in the transcribed utterance using the one or more entity names output by the phonetic similarity model further comprises:
providing the transcribed utterance as input to a transcription error locator trained to locate transcription errors in phonetic transcriptions;
receiving location data as output from the transcription error locator, the location data identifying a location within the transcribed utterance that has been identified as having a predefined likelihood of including an error;
providing, as input to a phonetic correction model, a portion of the transcribed utterance corresponding to the location and the one or more entity names from the contextually relevant entity list that has been determined to satisfy a phonetic similarity metric with the transcribed utterance;
receiving as output from the phonetic correction model a select entity name from the contextually relevant entity list, the select entity name determined to have a closest phonetic association with the portion of the transcribed utterance corresponding to the location of the error; and
replacing the portion of the transcribed utterance with the select entity name.

8. A transcription error correction system (200) comprising:
a context-based entity list compiler (220) stored in memory that:
receives a transcribed utterance (218) pertaining to a conversation;
accesses conversation context data associated with the conversation;
based on the conversation context data, determines a contextually relevant entity list (222) identifying entities with contextual relevance to the conversation; and
a phonetic similarity model (224) stored in memory that receives an input including both the transcribed utterance and the contextually relevant entity list, the phonetic similarity model being trained to recognize phonetic similarities between entities and phonetic data; and
a context-based phonetic corrector (214) stored in memory that:
receives a phonetically relevant entity list (128) generated by the phonetic similarity model, the phonetically relevant entity list including one or more entities from the contextually relevant entity list that have been determined to satisfy a phonetic similarity metric with the transcribed utterance; and
identifies and corrects a transcription error in the transcribed utterance based on the phonetically relevant entity list.

9. The transcription error correction system of claim 8, wherein the input includes a biasing input parameter that includes the entities named on the contextually relevant entity list, the biasing input parameter increasing selection odds of the entities named on the contextually relevant entity list.

10. The transcription error correction system of claim 9, wherein the phonetic similarity model is trained to compare a vectorized representation of the transcribed utterance to stored embeddings corresponding, the comparison being based at least in part on the biasing input parameter.

11. The transcription error correction system of claim 8, wherein the context-based entity list compiler is further configured to mine the conversation context data from one or more of:
emails of participants in the conversation;
contact lists of the participants in the conversation; and
documents of the participants in the conversation.

12. The transcription error correction system of claim 11, wherein the context-based entity list compiler is further configured to:
provide the transcribed utterance as input to a model trained to perform topic extraction;
receive, as output from the model, a relevant topic identified based on the transcribed utterance;
access a topic-name list to identify entities associated with the relevant topic; and
store, within the contextually relevant entity list, one or more entities named in the topic-name list.

13. The transcription error correction system of claim 11, wherein the context-based entity list compiler is further configured to:
identify entities referenced earlier in the conversation that are not referenced in transcribed utterance; and
include in the contextually relevant entity list the entities referenced earlier in the conversation.

14. The transcription error correction system of claim 8, wherein correcting the transcription error in the transcribed utterance based on the phonetically relevant entity list further comprises:
providing the transcribed utterance as input to a transcription error locator trained to locate transcription errors in phonetic transcriptions;
receiving location data as output from the transcription error locator, the location data identifying a location within the transcribed utterance that has been identified as having a predefined likelihood of including an error;
providing, as input to a phonetic correction model, a portion of the transcribed utterance corresponding to the location and the phonetically relevant entity list;
receiving as output from the phonetic correction model a select entity name from the phonetically relevant entity list, the select entity name determined to have a closest phonetic association with the portion of the transcribed utterance corresponding to the location of the transcription error; and
replacing the portion of the transcribed utterance with the select entity name.

15. One or more tangible computer-readable storage media (404) encoding processor-executable instructions for executing a computer process comprising:
obtaining (304) conversation context data associated with a conversation or participants of the conversation to compile a contextually relevant list of entities with contextual relevance to the conversation;
providing (306) a phonetic similarity model with an input that includes both a transcribed utterance from the conversation and a biasing parameter that identifies the contextually relevant list of entities, the phonetic similarity model being trained to recognize phonetic similarities between entities and phonetic data;
receiving (308), from the phonetic similarity model, a phonetically relevant entity list including one or more entities from the contextually relevant list of entities determined to satisfy a phonetic similarity metric with the transcribed utterance; and
correcting (310) a transcription error in the transcribed utterance using an entity name included on the phonetically relevant entity list.
